Europäisches Patentamt

European Patent Office

Office européen des brevets

(11) Numéro de publication: **0 290 418**
**A2**

## (12) DEMANDE DE BREVET EUROPEEN

(21) Numéro de dépôt: **88870075.4**

(22) Date de dépôt: **29.04.88**

(51) Int. Cl.⁴: **A 47 J 36/06**

(30) Priorité: **06.05.87 BE 8700484**

(43) Date de publication de la demande:
**09.11.88 Bulletin 88/45**

(84) Etats contractants désignés:
**AT BE CH DE ES FR GB GR IT LI LU NL SE**

(71) Demandeur: **Denooz, Suzanne**
**Rue Bosny 20**
**B-4920 Embourg (BE)**

(72) Inventeur: **Denooz, Suzanne**
**Rue Bosny 20**
**B-4920 Embourg (BE)**

(74) Mandataire: **Vanderperre, Robert et al**
**Bureau VANDER HAEGHEN 63 Avenue de la Toison d'Or**
**B-1060 Bruxelles (BE)**

(54) **Couvercle pour récipient de cuisson.**

(57) Le couvercle (4) est constitué de deux disques superposés (5, 6) montés sur un axe central (7), un premier disque (6) est monté librement sur ledit axe (7) et a son bord périphérique propre à s'adapter sur le bord d'un récipient, ce disque (6) présentant des ouvertures (10), le second disque (5) est fixé solidairement sur ledit axe (7) et présente au moins une découpe ou ouverture (15) de manière qu'il dégage les ouvertures (10) du premier disque (6) lorsq'il se trouve dans une première position angulaire par rapport au premier disque et qu'il obture les ouvertures (10) lorsqu'il se trouve dans une position angulaire décalée par rapport à sa première position angulaire.

FIG. 1

EP 0 290 418 A2

# Description

## COUVERCLE POUR RECIPIENT DE CUISSON

La présente invention concerne un perfectionnement aux récipients de cuisson et plus particulièrement un couvercle spécialement conçu pour faciliter le déversement d'un liquide hors d'un récipient tout en retenant les produits solides contenus dans le liquide.

Lors de la préparation d'aliments cuits, il est fréquent que la cuisson se termine par l'égouttage des aliments cuits dans le récipient et le déversement du liquide de cuisson. L'égouttage est habituellement une opération malaisée : souvent le liquide bouillant provoque des brûlures aux mains et souvent, le couvercle tombe et entraîne la perte d'aliments emportés par le liquide déversé.

L'invention a pour objet un couvercle agencé pour éliminer ces inconvénients. Cet objectif est atteint suivant l'invention par le fait que le couvercle est constitué de deux disques superposés montés sur un axe central, un premier disque étant monté librement sur ledit axe et ayant son bord périphérique propre à s'adapter sur le bord d'un récipient, ce disque présentant des ouvertures, et le second disque est fixé solidairement sur ledit axe et présente au moins une découpe ou ouverture de manière qu'il dégage les ouvertures du premier disque lorsqu'il se trouve dans une première position angulaire par rapport au premier disque et qu'il obture les ouvertures du premier disque lorsqu'il se trouve dans une position angulaire décalée par rapport à sa première position angulaire.

La découpe ou ouverture dans le second disque consiste en perforations correspondant aux ouvertures dans le premier disque. Un moyen de retenue est encore prévu pour maintenir un disque sur le bord périphérique précité lorsque le couvercle est en place sur le récipient.

Grâce au couvercle selon l'invention, il est possible d'égoutter le contenu d'un récipient par une manoeuvre aisée qui permet d'éviter le risque de brûlures et d'éviter l'évacuation de produits solides avec le liquide déversé. De plus, le couvercle selon l'invention permet de procéder à un égouttage sans avoir besoin d'utiliser une passoire comme cela est de pratique courante, d'où économie d'ustensile et de manipulation. Enfin, le disque obturateur permet de régler aisément l'exédent de vapeur ou de liquide à l'intérieur du récipient pendant la cuisson.

L'invention est décrite dans ce qui suit à l'aide des dessins ci-annexés. Dans ces dessins :

- La figure 1 est une vue de dessus d'un récipient muni d'un couvercle exemplaire selon l'invention.

- La figure 2 est une vue en coupe suivant la ligne II-II de la figure 1, le couvercle étant montré en position de fermeture.

- La figure 3 est une vue semblable à celle de la figure 2, mais montrant le couvercle avec son disque inférieur tourné angulairement pour libérer le couvercle et pouvoir le retirer de dessus le récipient.

- La figure 4 est une vue de dessus partielle d'un deuxième mode d'exécution exemplaire du couvercle selon l'invention.

- La figure 5 est une vue d'un détail du couvercle selon la figure 4.

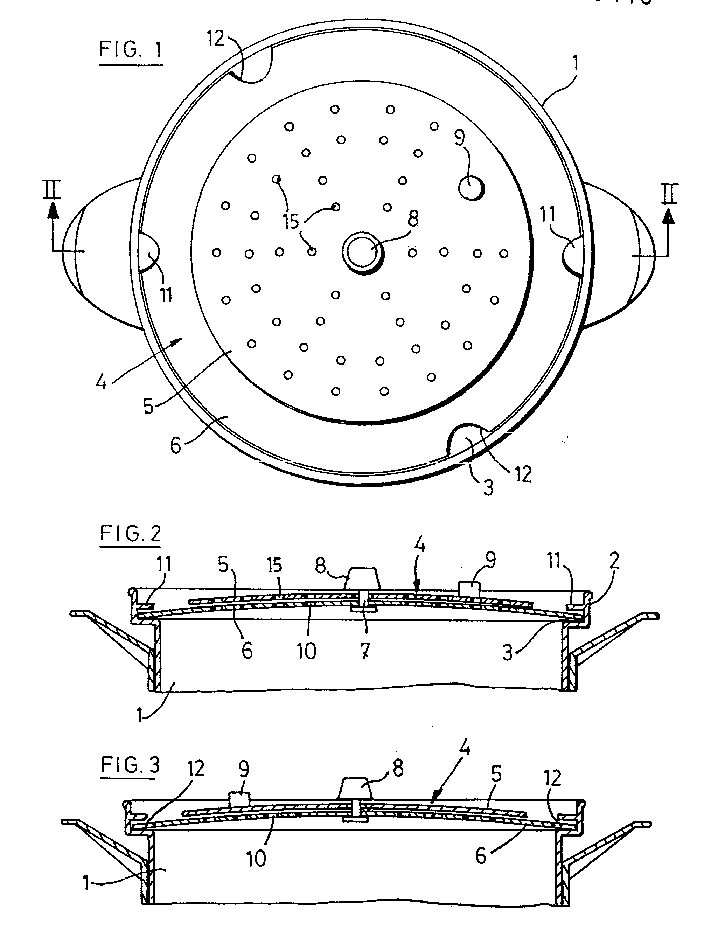

Dans les figures 1 à 3 est représenté un récipient 1, de forme générale cylindrique par exemple, qui présente un bord supérieur 2 entourant une ouverture. Le bord 2 présente intérieurement un rebord périphérique 3 destiné à supporter le couvercle 4.

Suivant l'invention, le couvercle 4 est constitué de deux disques superposés 5 et 6 montés sur un axe central 7. Les disques 5 et 6 ont par exemple et avantageusement un profil incurvé. Le disque inférieur 6 est fixé solidairement sur l'axe 7 tandis que le disque supérieur 5 est monté librement autour de l'axe 7. Cet axe a une longueur qui laisse un jeu axial au disque supérieur 5. L'extrémité extérieure de l'axe 7 est garnie d'un bouton de préhension 8. Le disque supérieur 5 est muni d'un bouton de manoeuvre 9 permettant de faire tourner ce disque autour de l'axe 7. Le disque 5 présente des ouvertures 15 réparties de manière à correspondre et pouvoir se superposer à des ouvertures 10 formées dans le disque inférieur 6. Ces ouvertures dont la distribution peut être quelconque, servent à l'échappement d'un excès de vapeur pendant la cuisson du contenu du récipient 1 et au déversement du liquide de cuisson.

Dans l'exemple illustré dans les figures 1 à 3, le disque supérieur 5 a un diamètre plus petit que celui du disque inférieur 6 qui est destiné à reposer sur le rebord périphérique intérieur 3 d'un récipient. Le diamètre du disque inférieur est adapté au diamètre de l'ouverture ceinturée par le bord supérieur 2 du récipient.

Un moyen de retenue est prévu pour maintenir le disque inférieur 6 en place sur le récipient pendant que l'on égoutte les aliments contenus dans le récipient 1. Dans l'exemple illustré, ce moyen de retenue est constitué d'ergots 11 faisant saillie sur le pourtour intérieur du bord 2 du récipient 1 et sous lesquels vient se loger le bord du disque inférieur 6 lorsque le couvercle 4 est mis en place sur le récipient. La figure 1 montre à titre d'exemple deux ergots de retenue 11, ce nombre pouvant évidemment être quelconque. Pour permettre ou faciliter la mise en place du disque inférieur 6 sur le rebord intérieur 3, le disque inférieur 6 présente sur son pourtour des découpes 12 dont le nombre et la disposition correspondent au nombre et à la disposition des ergots 11 précités, ces découpes 12 étant dimensionnées pour pouvoir glisser au-dessus desdits ergots 11 afin de poser le disque inférieur 6 sur le rebord 3 du récipient. Une fois posé sur le rebord, le disque inférieur 6 est placé en position de fermeture par simple rotation afin de faire glisser le bord du disque 6 sous les ergots de retenue 11. Le bouton de préhension 8 permet cette manoeuvre de rotation du disque 6. Il est bien entendu que tout autre moyen de retenue peut être prévu également.

L'utilisation du couvercle selon la figure 1 est simple. La substance ou l'aliment à cuire étant déposé dans le récipient 1 avec le liquide de cuisson, on place le couvercle 4 avec le disque 6 posé sur le rebord 3 puis on tourne angulairement le disque 6 pour le faire glisser sous les ergots 11 afin que ceux-ci maintiennent le disque 6 et le couvercle 4. Pendant la cuisson, le disque 5 est positionné angulairement en sorte que ses ouvertures 15 ne coïncident pas avec les ouvertures 10 du disque 6 de manière à obturer le récipient. Pour égoutter le contenu du récipient, on fait tourner le disque 5 à l'aide du bouton 9 de manière que ses ouvertures 15 se superposent à celles du disque 6 : le liquide peut alors être déversé facilement et sans danger en inclinant le récipient 1. Le couvercle 4 reste bien en place et retient les produits solides tandis que le liquide se déverse.

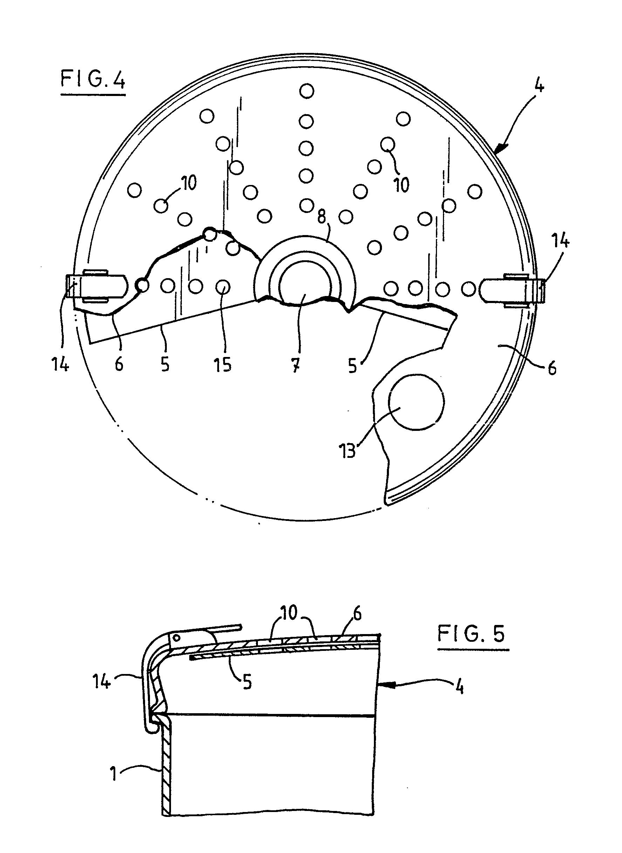

Dans le mode d'exécution illustré dans les figures 1 à 3, le disque inférieur 6 repose sur le récipient 1 et le disque supérieur 5 est mobile. Il est bien évident cependant que les disques peuvent être superposés en ordre inverse. Les figures 4 et 5 représentent un exemple d'exécution dans lequel c'est le disque inférieur 5 qui est manoeuvrable et le disque supérieur 6 qui s'adapte sur le récipient. Le disque 5 est fixé sur l'axe 7 et le disque 6 est monté librement autour de l'axe 7. Comme on peut le voir dans la partie arrachée dans la figure 4, le disque inférieur 5 a avantageusement une surface qui n'est pas celle d'un cercle entier de manière à faciliter le nettoyage de la face interne du disque supérieur 6. Les ouvertures 10 dans le disque 6 sont disposées pour pouvoir correspondre aux ouvertures 15 du disque 5 pour une position angulaire prédéterminée de celui-ci. Lorsque le disque 5 est tourné dans une position décalée angulairement par rapport à la position précitée, les ouvertures 15 obturent les ouvertures 10 du couvercle 6.

Dans le mode d'exécution des figures 4 et 5 le disque est muni de crochets 14 qui servent de moyens de retenue pour la fixation détachable du couvercle sur un récipient. Les crochets 14 sont profilés pour coopérer avec et s'accrocher sous un rebord périphérique d'un récipient. L'utilisation du couvercle selon la figure 4 est en tout point semblable à celle du couvercle de la figure 1, mais il présente l'avantage supplémentaire de pouvoir s'adapter sur des récipients quelconques ayant une ouverture dont le diamètre correspond pratiquement à celui du couvercle selon l'invention. Le disque 6 présente également une ouverture 13 pour permettre l'introduction d'un instrument quelconque afin de vérifier l'état de cuisson des aliments contenus dans le récipient.

D'autres modifications et variantes apparaîtront clairement à l'homme de l'art à la lecture de ce qui précède et il est entendu que l'invention n'est nullement limitée aux modes de réalisation exemplaires décrits. Les revendications ci-annexées visent à couvrir toutes les modifications et variantes entrant dans l'esprit de l'invention.

## Revendications

1. Couvercle pour récipient de cuisson, caractérisé en ce qu'il comprend deux disques superposés (5,6) montés sur un axe central (7), en ce qu'un premier disque (6) est monté librement sur ledit axe (7) et a son bord périphérique propre à s'adapter sur le bord d'un récipient, ce disque (6) présentant des ouvertures (10), et en ce que le second disque (5) est fixé solidairement sur ledit axe (7) et présente au moins une découpe ou ouverture (15) de manière qu'il dégage les ouvertures (10) du premier disque (6) lorsqu'il se trouve dans une première position angulaire par rapport au premier disque et qu'il obture les ouvertures (10) lorsqu'il se trouve dans une position angulaire décalée par rapport à sa première position angulaire.

2. Couvercle selon la revendication 1, caractérisé en ce que ladite découpe ou ouverture dans le second disque (5) consiste en perforations (15) correspondant aux ouvertures (10) dans le premier disque (6).

3. Couvercle selon la revendication 1 ou 2, caractérisé en ce que le second disque (5) est situé au-dessus du premier disque (6) et en ce qu'un bouton de manoeuvre (9) est prévu sur la face extérieure dudit second disque (5).

4. Couvercle selon la revendication 1 ou 2, caractérisé en ce que le second disque (5) est situé en dessous du premier disque (6).

5. Couvercle selon l'une quelconque des revendications 1 à 4, caractérisé en ce qu'un bouton de préhension (8) est fixé sur ledit axe central (7).

6. Couvercle selon l'une quelconque des revendications 1 à 5, caractérisé par au moins une découpe (12) formée sur le pourtour du premier disque (6), ladite découpe (12) étant dimensionnée pour passer au-dessus d'au moins un moyen de retenue (11) pour retenir le couvercle.

7. Couvercle selon la revendication 1, caractérisé en ce qu'il comprend un moyen de retenue (14) pour fixer le couvercle sur un récipient de façon détachable.

8. Récipient de cuisson présentant un rebord périphérique (3), caractérisé en ce qu'il est fermé par un couvercle (4) constitué de deux disques superposés (5, 6) montés sur un axe central (7) selon l'une quelconque des revendications précédentes.

9. Récipient selon la revendication 8, caractérisé en ce que ledit moyen de retenue est constitué d'au moins un ergot (11) faisant saillie sur le pourtour intérieur du bord (2) du récipient, ledit ergot (11) étant agencé pour maintenir un disque (6) sur le rebord intérieur (3) du récipient lorsque le couvercle (4) se trouve mis en place sur le récipient.

0290418

FIG. 1

FIG. 2

FIG. 3

FIG.4

FIG. 5